# EUROPEAN PATENT SPECIFICATION

(11) **EP 2 927 115 B1**
(45) Date of publication and mention of the grant of the patent: **08.05.2019**
(21) Application number: 14171081.4
(22) Date of filing: 04.06.2014
(51) Int. Cl.: F16C 23/08, F16C 19/38, F16C 11/06, F16C 33/78, B64C 9/20

(54) **An edge flap arrangement for an aircraft wing**
Klappenanordnung für einen Flügel eines Flugzeugs
Système de volet pour une aile d'aéronef

(30) Priority: 03.06.2014 US 201414294947; 28.02.2014 US 201414194016
(43) Date of publication of application: 07.10.2015
(73) Proprietor: Roller Bearing Company of America, Inc., Oxford, CT 06478 (US)
(72) Inventor: Habibvand, Alex, Orange, CA 92867 (US)
(74) Representative: Seemann & Partner Patentanwälte mbB

(56) References cited:
- WO-A1-02/21007
- WO-A1-2014/021958
- US-A- 2 728 616
- US-A- 2 764 432
- US-A1- 2010 059 633

## Description

This application claims the priority of the U.S. patent application with the official file number 14/294,947, filed on June 03, 2014.

### Field of the Invention

The present invention relates generally to a composite seal for use in bearings and more particularly to a composite annular seal assembly having a resilient ring disposed between (e.g., sandwiched between) two annular retaining rings, for use in hourglass type bearings for use in aircraft and more particularly in a drop linkage assembly of a trailing edge flap arrangement of such aircraft.

### Background of the Invention

There are many types of bearings that are used in various applications. Such bearings include journal bearings, roller bearings, spherical bearings and hourglass type bearings. In general, these bearings have an inner race that is disposed at least partially in an outer race. The inner race and outer race are movable relative to one another. There is an annular cavity between the inner race and the outer race that typically contains a lubricant. One well known problem with bearings is the ingress of debris and contaminants into the annular cavity which can cause premature failure of the bearings due to degradation of the lubrication. Moreover, operation of the bearing can cause the lubricant to inadvertently escape from the annular cavity.

In an effort to mitigate the aforementioned problems, seals have been positioned across the annular cavity to maintain the lubricant in the cavity and to prevent the ingress of debris into the annular cavity. However, during operation, such seals become dislodged from the bearing and fail to function. In addition, such seals have often been too flexible, thereby allowing the seal to glide over debris and sweep the debris into the annular cavity.

WO 2014/021958 A1 discloses a bearing assembly including an outer race having an inner surface defining a concave contour and an inner race positioned in the outer race. The inner race has an inner surface defining a bore therethrough and an outer surface defining at least one groove circumscribing the outer surface. A plurality of rolling elements is rollably located in the groove and is in rolling contact with the inner surface of the outer race. A lubricious liner has an inner liner-surface and an exterior liner-surface, the exterior liner-surface being disposed on the inner surface defining the bore. The lubricious liner has a modulus of compression of a magnitude sufficient to allow misalignment of the inner liner-surface relative to the exterior liner-surface in response to a force applied thereto.

US 2,728,616 discloses an antifriction bearing comprising an inner and outer bearing ring with interposed antifriction bearing members. The inner ring extends beyond said outer ring at one end. The inner ring at said one end has a concentric groove in part arcuate in cross-section extending around said inner ring, said groove at an arcuate part extending at one axial end substantially to the outer diameter of said inner ring and terminating at the outer axial end in a generally radial shoulder. A bearing seal carried by said outer ring and having a generally flexible inner edge for resilient contact with an arcuate part of said groove.

Bearings are typically used in aircraft wing flap arrangements. For example, U.S. Patent No. 8,714,493 describes a trailing edge flap arrangement for an aircraft wing that includes a drop linkage arrangement that includes one or more bearings. The subject matter of U.S. Patent No. 8,714,493 is incorporated by reference herein, in its entirety.

### Summary of the Invention

The invention is the subject-matter of claim 1.

The object to be solved is to provide an edge flap arrangement having a bearing, wherein dislodging of bearing seals from the bearing and overly flexible seals gliding over debris and sweeping debris into the bearings should be avoided.

This object, i.e.the technical problem, is solved by the invention.

There is further disclosed herein a bearing, not being the invention, installed in a wing flap actuator of an aircraft, the bearing comprising: an outer race having a first inner surface and an interior area; an inner race having an outer surface, a portion of the inner race being disposed in the interior area; an annular seal assembly snap-fit into the outer race, the annular seal assembly comprising: a first annular retaining ring defining a first radially outermost portion; a second annular retaining ring defining a second radially outermost portion; and a resilient ring defining a third radially outermost portion, the resilient ring being disposed between the first annular retaining ring and the second annular retaining ring; the first radially outermost portion, the second radially outermost portion and the third radially outermost portion being aligned with one another; the resilient ring projecting radially inward from the first annular retaining ring and the second annular retaining ring; and the resilient ring being more compressible and flexible than the first annular retaining ring and the second annular retaining ring.

Further characteristics of the invention will become apparent from the description of the embodiments according to the invention together with the claims and the included drawings.

The invention is described below, without restricting the general intent of the invention, based on exemplary embodiments, wherein reference is made expressly to the drawings with regard to the disclosure of all details according to the invention that are not explained in greater detail in the text.

### Description of the Drawings

FIG. 1 is a cross-sectional view of a portion of a bearing which can be used with the present invention;
FIG. 2A is an edge view of a composite annular seal assembly for the bearing shown in FIG. 1;
FIG. 2B is a side view of the composite annular seal assembly of the bearing shown in FIG. 2A;
FIG. 3A is an enlarged view of a portion of the composite annular seal of FIG. 1;
FIG. 3B is an enlarged view of another embodiment of the composite annular seal of FIG.1;
FIG. 3C illustrates an alternative to the embodiment of FIG. 3B;
FIG. 4 is a cross sectional view of the bearing of FIG. 1 with the composite seal assembly shown in a laterally deflected state during installation into the bearing;
FIG. 5 is a cross sectional view of a journal bearing;
FIG. 6 illustrates schematically a cross section through an aircraft wing having a trailing edge flap arrangement in accordance with the invention shown in its retracted position; and
FIG. 7 illustrates the aircraft wing with the flap arrangement partially deployed.

These and other aspects are discussed below in more detail herein and are illustrated in the attached figures.

In the drawings, the same or similar types of elements or respectively corresponding parts are provided with the same reference numbers in order to prevent the item from needing to be reintroduced.

### Detailed Description of the Invention

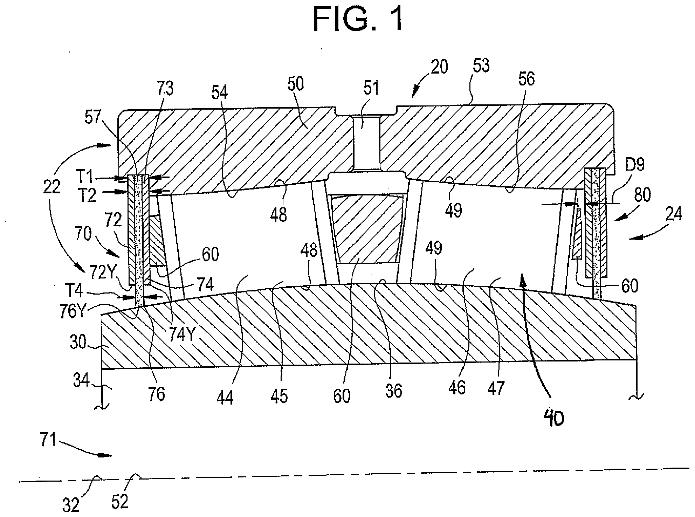

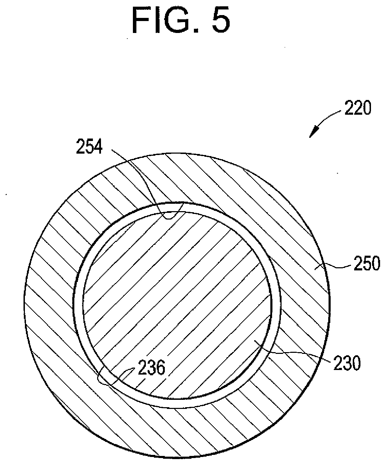

In reference to FIG. 1, a roller bearing apparatus 20 in accordance with the present invention is shown. In the embodiment illustrated in FIG. 1, the bearing 20 is an angular contact self-aligning bearing having hourglass type rollers 45, 47 as described herein. The bearing 20 has a composite annular seal assembly 70 (e.g., a sandwich seal) positioned on opposing ends thereof, as described further herein. The composite annular seal assembly 70 inhibits the ingress of contaminants into internal areas of the bearing 20 and egress of lubricant therefrom, as described herein. While the angular contact self-aligning bearing having hourglass type rollers is shown and described, the present invention is not limited in this regard as the composite annular seal assembly 70 may be employed with any type of bearing including but not limited to rolling bearings having balls and/or rollers, spherical plain bearings and journal bearings (see e.g., FIG. 5).

As shown in FIG. 1, the bearing 20 includes an inner race 30 and an outer race 50. The inner race 30 includes an inner race surface 36. The inner race surface 36 is generally convex. The inner race 30 defines a bore 34 extending therethrough. In some embodiments, the bore 34 may be coaxial with a central axis 32 of the inner race 30. In other embodiments, the bore 34 may be parallel to and radially displaced from the central axis 32 of the inner race 30, i.e. eccentric. A shaft (not shown) may be received in the bore 34. The shaft may be fixed about the central axis 32 relative to the inner race 30 by, for example, an interference fit between the shaft and the bore 34. It should be understood that although an interference fit is described in reference to the embodiment shown in FIG. 1, the present invention is not limited in this regard and the shaft may be fixed relative to the bore 34 of the inner race 30 using other known techniques, including, for example, welding, thermal installation, pinning, or by providing a bore and shaft with similarly shaped angular cross-sections to inhibit rotation slippage. In yet other embodiments, the inner race 30 and the shaft are the same component. In yet other embodiments, the shaft may be rotatable relative to the inner race 30.

The outer race 50 is annular about a central axis 52 of the outer race 50. The central axis 52 is coaxial with the central axis 32 of the inner race 30 when bearing is aligned. It should be understood that the central axis 32 of the inner race 30 and the central axis 52 of the outer race 50 may be parallel and laterally displaced, for example, when the bearing 20 is subject to a radial force.

In the embodiment illustrated in FIG. 1, the outer race 50 defines a first outer race surface 54 and a second outer race surface 56, and each of the first and second outer race surfaces 54, 56 is generally opposite the inner race surface 36. Each of the first and second outer race surfaces 54, 56 is generally convex. The first outer race surface 54 and the inner race surface 36 define a first raceway 44 and the second outer race surface 56 and the inner race surface 36 define a second raceway 46. While the first and second outer race surfaces 54, 56 are shown and described as being generally convex, the present invention is not limited in this regard as in the embodiment shown in FIG. 5 wherein a journal bearing 220 has a concave race surface 254 of the outer race 250 and has a pin 230 with a convex outer race surface 236.

As illustrated in FIG. 1, the bearing 20 also comprises a plurality of first rollers 45 disposed in the first raceway 44, and a plurality of second rollers 47 disposed in the second raceway 46. Each of the plurality of first rollers 45 defines a first concave outer surface 48 that generally conforms to the convex surfaces of the inner race surface 36 and the first outer race surface 54. Each of the plurality of second rollers 47 defines a second concave outer surface 49 that generally conforms to the convex surfaces of the inner race surface 36 and the second outer race surface 56. This type of roller 45, 47 is generally referred to as an hourglass roller because of its generally concave surface extending between its ends. The bearing 20 further includes a cage 60 disposed between the inner race 30 and the outer race 50. The rollers 45, 47 and the cage 60 facilitate rotation of the outer race 50 relative to the inner race 30. The cage 60 also facilitates precessing of the rollers 45, 47 so that each of the rollers 45, 47 cycle through a load zone, even though the bearing 20 may be subject to an oscillatory rotation. Although a cage 60 is shown in the FIG. 1, the present invention is not limited in this regard and a person of ordinary skill in the art and familiar with this disclosure will understand that other known methods of precessing or indexing may be employed.

The outer race 50 defines a circumference 53 which includes a plurality of equally-spaced holes 51 therethrough for receiving a lubricant. The plurality of holes 51 provide fluid communication from an area outside the outer race 50 to a cavity 40 defined by the inner race 30 and outer race 50 and including the first raceway and the second raceway 44, 46. The plurality of holes 51 allow lubricant to be introduced and maintained in the first and second raceways 44, 46.

As shown in FIG. 1, the bearing 20 includes a first composite annular seal assembly 70 at or proximate to a first end 22 of the bearing 20 and a second composite annular seal assembly 80 at or proximate to a second end 24 of the bearing 20. The composite annular seal assemblies 70, 80 facilitate retention of lubricant in the first and second raceways 44, 46 and inhibit the ingress of contaminants into the first and second raceways 44, 46. The first composite annular seal assembly 70 extends from the first outer race surface 54 to the inner race surface 36; and the second composite annular seal assembly 80 extends from the second outer race surface 56 to the inner race surface 36. The composite annular seal assemblies 70, 80 are positioned axially adjacent to the cage 60. In one embodiment as shown with respect to the second composite annular seal assembly 80, the composite annular seal assembly 80 is positioned axially adjacent to the cage 60 and spaced apart therefrom by a distance D9 as shown in FIG. 1. In one embodiment, the composite annular seal assemblies 70, 80 define a substantially flat configuration and are positioned substantially parallel to one another. The disclosed hourglass roller bearing 20 may be subject to oscillatory rotation about its central axis 32, 52. In addition, the bearing 20 is angularly displaceable. For example, the central axis 52 of the outer race 50 may become angularly displaced from the central axis 32 of the inner race 30. To the extent the bearing 20 becomes angularly displaced as a result of an external force, the bearing 20 is configured to self-align. The inventors have discovered that bearing seals currently on the marketplace tend to dislodge or fail when such a bearing is subject to such angular displacement. The inventors have discovered that the composite annular seal assembly 70, 80 disclosed in the present application overcomes one or more of these problems associated with known seals, and is better capable of retaining its position when the bearing is subject to angular displacement.

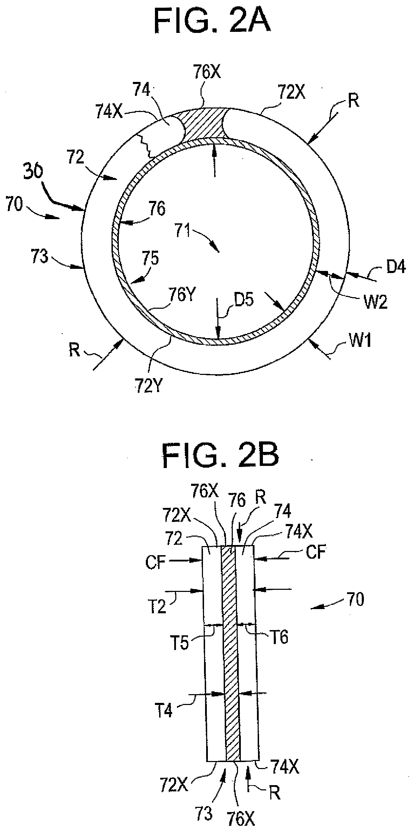

As shown in FIG. 2A, the first composite annular seal assembly 70 is generally annular and defines a bore 71 extending therethrough. At least a portion of the inner race 30 extends through the bore 71 as shown in FIG. 1. The first composite annular seal assembly 70 includes a first annular retaining ring 72 and a second annular retaining ring 74. The first and second annular retaining ring 72, 74 are generally annular, have a bore extending therethrough, and are often referred to as "seal caps."

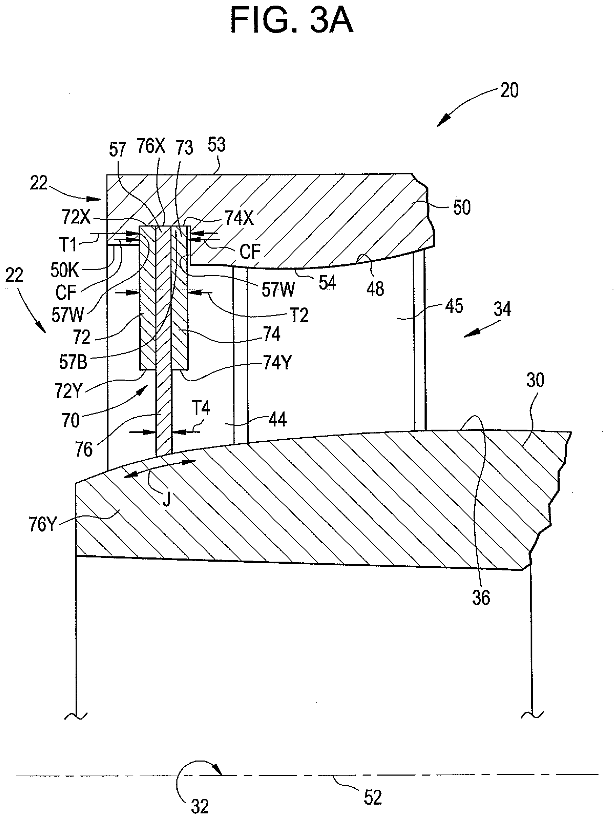

Referring to FIGS. 1 and 2B, the resilient ring 76 is disposed, i.e. sandwiched, between the first annular retaining ring 72 and the second annular retaining ring 74. In the front view of the composite annular seal 70 of FIG. 2A a portion of the first annular retaining ring 72 is shown cut away to illustrate the resilient ring 76 positioned thereunder. In FIG. 2A a portion of the resilient ring 76 is cut away to illustrate the second annular retaining ring 74 thereunder. As shown in FIGS. 2A, 2B and 3A, The composite annular seal assembly 70 defines an outer radial end 73 defined by a first radially outermost portion 72X of the first annular retaining ring 72, a second radially outermost portion 74X of the second annular retaining ring 72 and a third radially outermost portion 76X of the resilient ring 76. The first radially outermost portion 72X of the first annular retaining ring 72, the second radially outermost portion 74X of the second annular retaining ring 72 and the third radially outermost portion 76X are aligned with one another at the outer radial end 73.

As best shown in FIGS. 1, 2A and 3A, the resilient ring 76 extends from the third radially outermost portion 76X radially inward to an inner radial end 76Y. The inner radial end 76Y is positioned radially inward from an inner radial end 72Y of the first annular retaining ring 72 and is positioned radially inward from an inner radial end 74Y of the second annular retaining ring 74. In one embodiment the resilient ring 76 has a width W1 and the first annular retaining ring 72 and the second annular retaining ring 74 each have a width W2. The width W2 is less than the width W1. In one embodiment, the width W2 is between about 70 percent and 90 percent of the width W1.

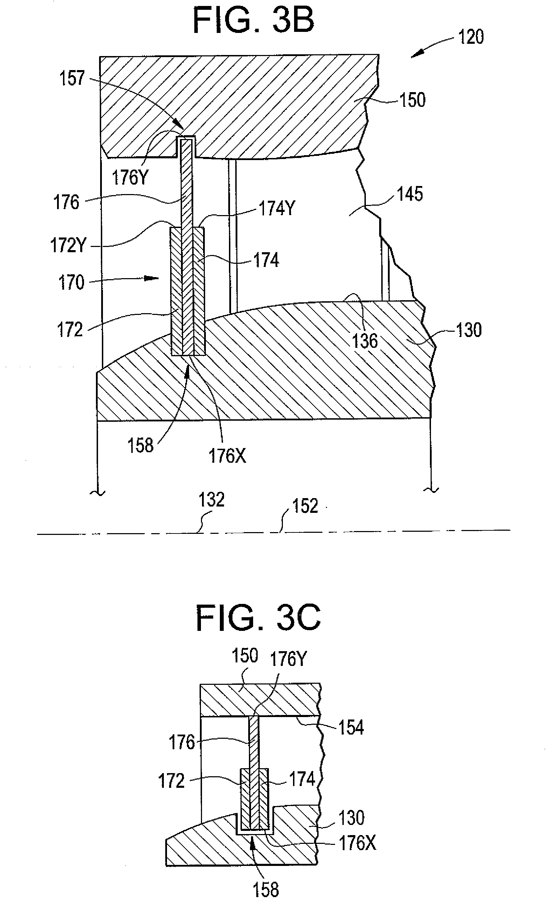

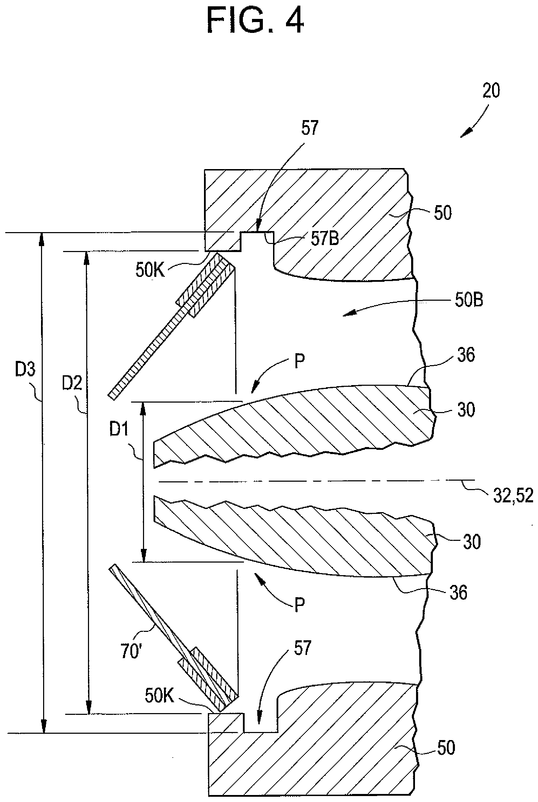

As shown in FIG. 1, the first end 73 of the composite annular seal assembly 70 is received in a radially inward facing groove 57 defined in the outer race 50 adjacent to or proximate the first outer race surface 54 and a lip 50K (see FIG.3) located at the first end 22 of the bearing 20. In the embodiment shown in FIG. 1, the groove 57 defines a channel width T1. The groove is defined by opposing side walls 57W and a base 57B extending between the opposing side walls 57W, as shown in FIG. 3A. As best shown in FIG. 2B, the first end 73 of the composite annular seal assembly 70 defines a thickness T2, wherein T2 includes a thickness T5 of the first annular retaining ring 72, a thickness T6 of the second annular retaining ring 74 and a thickness T4 of the resilient ring 76. In one embodiment, T1 is greater than T2 to allow the first end 73 of the seal 70 to be snap-fit and retained in the groove 57 between the side walls 57W. The snap-fit is accomplished by laterally deflecting the composite annular seal 70 so that the first end 73 thereof is deflected radially inward to clear the lip 50KL and allow the first end 73 to snap into the groove 57, as described further herein with reference to FIG. 4.

While the composite annular seal assembly 70 is described as being seated and secured in the groove 57 using a snap-fit assembly, the present invention is not limited in this regard as other means for securing the composite annular seal assembly 70 in the groove 57, such as for example, installing the first end 73 of the composite annular seal assembly 70 in the groove 57 by using an adhesive, or some other known means, may be used without departing from the broader aspects of the invention.

The inner radial end 76Y of the resilient ring 76 slidingly engages (i.e., laterally and circumferentially) the inner race surface 36 of the inner race 30 adjacent to the first end 22 of the bearing 20 when the first composite annular seal assembly 70 is received in the groove 57 and the inner race 30 is disposed in the outer race 50. As described above, the first end 73 of the composite annular seal assembly 70 is received in the radial groove 57 defined in the outer race 50. As a result, the resilient ring 76 and the first and second retainers 72, 74 are axially secured inside the groove 57. The composite annular seal assembly 70 exhibits a tolerance stack-up such that retention inside the groove 57 by additional means is not necessary. However, use of such additional means for axial retention of the resilient ring 76 and the first and second annular retaining rings 72, 74 inside the groove 57, such as use of adhesives, is considered within the scope of the invention. Similarly, the resilient ring 76 is retained between the first and second annular retaining ring 72 and 74 by the press fit inside the groove 57 such that additional means is not necessary. However, use of such additional means for retaining the resilient ring 76 between the first and second annular retaining ring 72 and 74, such as us of adhesives or mechanical fasteners, is considered within the scope of the invention.

The resilient ring 76 is more compressible and flexible than the first annular retaining ring 72 and the second annular retaining ring 74. For example, resilient ring 76 is made from polytetrafluoroethylene (PTFE) and the first annular retaining ring 72 and the second annular retaining ring 74 are metallic. In one embodiment the first annular retaining ring 72 and the second annular retaining ring 74 are manufactured from a metal sheet stock, for example, stainless steel sheet stock and plain carbon steel sheet stock. However, the present invention is not limited in this regard as any materials may be used for the resilient ring 76, the first annular retaining ring 72 and the second annular retaining ring 74 without departing from the broader aspects disclosed herein.

Depending on the size of the bearing 20, the thickness T4 of the resilient ring 76 is between about 0.0254 cm or 0.010 inch and 0.16256 cm or 0.064 inch.

In one embodiment, the thickness T5 of the first annular retaining ring 72 and the thickness T6 of the second annular retaining ring 74 are each about 0.02032 cm or 0.008 inch to about 0.16002 cm or 0.063 inch.

The second composite annular seal assembly 80 is similar in design and construction to the first composite annular seal assembly 70, and is therefore not described in detail herein. Although the hourglass bearing is shown as having a first raceway 44 and a second raceway 46, the present invention is not limited in this regard, and the composite annular seal assembly in accordance with the present invention may by employed on an hourglass roller bearing having only a single row of rollers. It has been discovered that the benefit of the disclosed composite annular seal assembly design is that it facilitates the oscillatory movement of the bearing 20, while remaining stable and in position.

Referring to FIG. 4, the groove 57 has a diameter D3 measured between opposing base portions 57B. A diameter D1 is defined between points of contact P of the inner radial end 76Y of the resilient seal 76 with the inner race surface 36. The outer race 50 defines the lip 50K axially outward from the groove 57. The lip 50K defines a bore 50B having a diameter D2. As shown in FIG. 2A, the composite annular seal assembly 70 has an outside diameter D4 and the resilient ring 76 has an inside diameter D5. In one embodiment, the diameter D2 of the bore 50B is less than the diameter D4 of the composite annular seal assembly 70 to allow the composite annular seal assembly 70 to be laterally elastically deformed, for example, by laterally deflecting the composite annular seal 70 into a deflected state as indicated by element number 70' in FIG.4 so that the first end 73 thereof is deflected radially inward to clear the lip 50K and allow the first end 73 to be snap-fit into the groove 57. While the composite annular seal assembly 70 is shown and described as being seated in a portion of the outer race 50 and slidingly engaging the inner race 30, and having the resilient ring 76 extending from the third radially outermost portion 76X radially inward to an inner radial end 76Y, the inner radial end 76Y being positioned radially inward from an inner radial end 72Y of the first annular retaining ring 72 and being positioned radially inward from an inner radial end 74Y of the second annular retaining ring 74, the present invention is not limited in this regard. For example, the composite annular seal 170 of FIG. 3B may be employed. The bearing 120 and composite annular seal 170 of FIG. 3B are similar to the bearing 20 and composite annular seal 70 of FIG. 3A, therefore like elements are assigned like reference numbers preceded by the numeral 1. The resilient ring 176 extends from a radially inner most portion 176X radially outward to an outer radial end 176Y. The outer radial end 176Y is positioned radially outward from an outer radial end 172Y of the first annular retaining ring 172 and is positioned radially outward from an outer radial end 174Y of the second annular retaining ring 174. The composite annular seal 170 is seated in the groove 158 and the radially outer most portion 176Y of the resilient ring 176 slidingly engages in the groove 157. In one embodiment, the composite annular seal has a radial slit therein, for example, across the first annular retaining ring 172, the second annular retaining ring 174 and/or the resilient ring 176, to facilitate installation into the groove 158. The composite annular seal 170 is similar to the composite annular seal 70 shown and described herein with regard to thickness and materials. While the radially outer most portion 176Y of the resilient ring 176 is shown and described as slidingly engaging the groove 157, the present invention is not limited in this regard as the groove 157 may be eliminated and the radially outer most portion 176Y of the resilient ring 176 may slidingly engage the outer race surface 154, as shown in FIG. 3C.

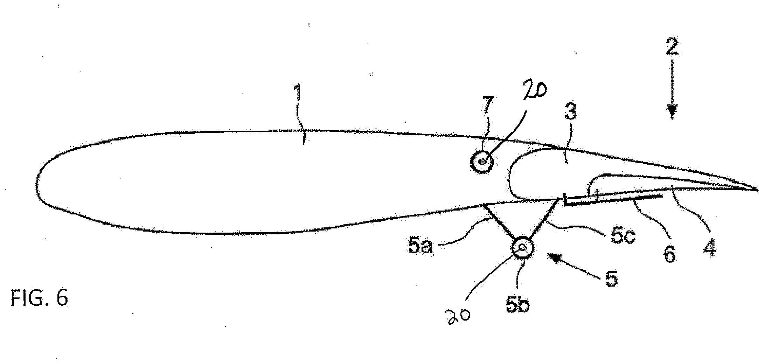

Referring to FIG. 6, an aircraft wing includes a main fixed wing portion 1 and a single slotted trailing edge flap arrangement 2. The flap arrangement 2 includes a main element 3 and an auxiliary flap element 4 supported by the main flap element 3. The main flap element 3 is pivotally supported from the fixed wing portion 1 by a drop hinge linkage arrangement 5. The drop hinge linkage arrangement 5 includes a fixed strut 5a, a hinge point 5b and a drop link 5c. The fixed strut 5a is mounted to the fixed wing portion 1 and carries the hinge point 5b. The drop link 5c connects the main flap element 3 to the hinge point 5b. The auxiliary flap element 4 is supported by a rail 6 mounted to the main flap element 3. The auxiliary flap element 4 is slidably disposed upon the rail 6 for translational movement relative to the main flap element 3. The hinge point 5b has one of the bearings 20 (as described herein with reference to FIGS. 1-5) mounted therein. The bearing 20 includes the seal assembly 80 disposed therein as described herein with reference to FIGS. 1-5. While the hinge point 5b is described as having one of the bearings 20 therein, the present invention is not limited in this regard as any number of the bearings 20 may be employed in the hinge point 5b. In one embodiment, the hinge point 5b has two of the bearings 20 installed therein; and in another embodiment, the hinge point 5b has two of the bearings 20 installed therein wherein the bearings 20 comprise different sized bearings.

FIG. 6 shows the flap arrangement 2 in its retracted position. The main flap element 3 is stowed, tucked against the trailing edge of the fixed wing portion 1. The auxiliary flap element 4 is stowed in a forward position so as to be nested beneath the rear of the main flap element 3. When stowed, the auxiliary flap element 4 completes the aerofoil profile of the main flap element 3. The trailing edges of the main and auxiliary flap elements 3 and 4 are substantially coincident when the auxiliary flap element 4 is in its retracted, stowed position. As further shown in FIG. 6, the main flap element 3 includes an actuator 7 (e.g., a linear or a rotary actuator), which is connected by a linkage arrangement (not shown) to the main flap element 3. In one embodiment, the actuator 7 has one of the bearings 20 (as described herein with reference to FIGS. 1-5) disposed therein. While the actuator 7 is described as having one of the bearings 20 therein, the present invention is not limited in this regard as any number of the bearings 20 may be employed in the actuator 7. For example, two bearings 100 are employed in a linear actuator. The bearing 20 includes the seal assembly 80 disposed therein as described herein with reference to FIGS. 1-5. The actuator 7 provides for movement of the main flap element 3 relative to the fixed wing portion 1. In one embodiment, the actuator 7 provides for movement of the drop hinge linkage arrangement 5 which, in turn, provides for movement of the main flap element 3 relative to the fixed wing portion 1.

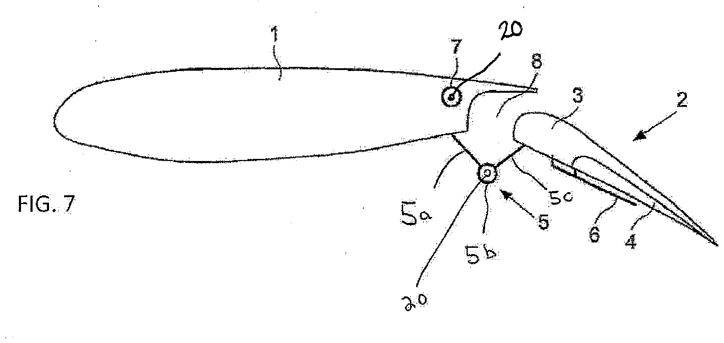

FIG. 7 illustrates the flap arrangement 2 in its partially extended position. The main flap element 3 is deployed by rotating it downwardly using the drop hinge mechanism 5. Movement of the main flap element 3 is effected by the rotary actuator 7 and the bearing 20 installed therein. As can be seen from FIG. 7, the auxiliary flap element 4 can remain in its stowed, fully forward position as the main flap element 3 is deployed. In this partially extended configuration, the flap arrangement 2 functions substantially identically to a standard drop hinge flap arrangement. With the main flap element 3 extended by rotation about the drop hinge mechanism 5, a slot 8 is opened up between the fixed wing portion 1 and the main flap element 3. The single slotted flap configuration shown in FIG. 7 enables high pressure air from the lower wing surface to pass through the slot 8 to energize the boundary layer over the upper surface of the main flap element 3 so as to postpone stall in a conventional manner. The single slotted trailing edge flap arrangement 2 is configured for use with an aircraft such as, for example, an Airbus A-350 aircraft.

While the present disclosure has been described with reference to various exemplary embodiments, it will be understood by those skilled in the art that various changes may be made and equivalents may be substituted for elements thereof without departing from the scope of the invention. Therefore, it is intended that the invention not be limited to the particular embodiment disclosed as the best mode contemplated for carrying out this invention, but that the invention will include all embodiments falling within the scope of the appended claims.

## Claims

1. An edge flap arrangement (2) for an aircraft wing, the arrangement comprising:
a main flap element (3) and an actuator (7) for moving the main flap element (3) relative to the aircraft wing;
a linkage arrangement supporting the main flap element (3) from the aircraft wing for movement relative to the aircraft wing, the linkage arrangement including a drop hinge link arrangement (5), the drop hinge link arrangement including a fixed strut (5a) suitable to be secured to the aircraft wing and
a drop link (5c) secured to the main flap element, the fixed strut (5a) and the drop link (5c) being pivotally connected by a hinge point (5b);
the hinge point (5b) comprising at least a first bearing (20), the first bearing (20) comprising:
an outer race (50) having a first inner surface (54) and an interior area, a radially inward facing groove (57) adjacent to the first inner surface (54);
an inner race (30) having an outer surface (36), a portion of the inner race (30) being disposed in the interior area;
**characterised in that** it comprises
a composite annular seal assembly (80) having a substantially flat configuration and being laterally elastically deflectable and thereby snap-fit into the groove (57) of the outer race (50), wherein the composite annular seal assembly (80) is capable of retaining its position when the bearing is subject to angular displacement,
the composite annular seal assembly (80) comprising:
a first annular retaining ring (72) defining a first radially outermost portion (74x);
a second annular retaining ring (74) defining a second radially outermost portion (74x); and
a resilient ring (76) defining a third radially outermost portion (76x), the resilient ring (76) being disposed between the first annular retaining ring (72) and the second annular retaining ring (76);
the first radially outermost portion (72x), the second radially outermost portion (74x) and the third radially outermost portion (76x) being aligned with one another;
the resilient ring (76) projecting radially inward from the first annular retaining ring (72) and the second annular retaining ring (74); and the resilient ring (76) being more compressible and flexible than the first annular retaining ring (72) and the second annular retaining ring (74).

2. The edge flap arrangement (2) of claim 1, further comprising:
at least a second bearing (20) installed in the actuator for moving the main flap element (3) relative to the aircraft wing, the at least one second bearing (20) comprising:
an outer race (50) having a first inner surface (54) and an interior area, a radially inward facing groove (57) adjacent to the first inner surface (54);
an inner race (30) having an outer surface (36), a portion of the inner race (30) being disposed in the interior area;
another composite annular seal assembly (80) having a substantially flat configuration and being laterally elastically deflectable and thereby snap-fit into the groove (57) of the outer race (50), wherein the composite annular seal assembly (80) is capable of retaining its position when the bearing is subject to angular displacement,
the composite annular seal assembly (80) comprising:
a first annular retaining ring (72) defining a first radially outermost portion (72x);
a second annular retaining ring (74) defining a second radially outermost portion (74x); and
a resilient ring (76) defining a third radially outermost portion (76x), the resilient ring (76) being disposed between the first annular retaining ring (72) and the second annular retaining ring (74);
the first radially outermost portion (72x), the second radially outermost portion (74x) and the third radially outermost portion (76x) being aligned with one another;
the resilient ring (76) projecting radially inward from the first annular retaining ring (72) and the second annular retaining ring (74); and
the resilient ring (76) being more compressible and flexible than the first annular retaining ring (72) and the second annular retaining ring (76).

3. The edge flap arrangement (2) of claim 1 or 2, wherein the hinge point (5b) comprises a plurality of first bearings (20).

4. The edge flap arrangement (2) of claim 2, wherein the actuator (7) comprises a plurality of second bearings (20).

5. The edge flap arrangement (2) of one of claims 1 to 4, wherein the edge flap is suitable for use as a trailing edge of a wing of an aircraft.

6. The edge flap arrangement (2) of one of claims 1 to 5, the first bearing (20) further comprising:
a plurality of first hourglass rollers (45), each of the plurality of first hourglass rollers (45) having a generally concave outer surface (48), the plurality of first hourglass rollers (45) being disposed between the inner race (30) and the outer race (50);
the first inner surface (54) being convex and the outer surface (36) being convex; and
each of the plurality of first hourglass rollers (45) engaging the outer surface (36) and the first inner surface (54).

7. The edge flap arrangement (2) of claim 6, the first bearing further comprising:
a second inner surface (56) defined by the outer race (50), the second inner surface (56) being convex;
a plurality of second hourglass rollers (47), each of the plurality of second hourglass rollers (47) having a generally concave outer surface, the plurality of second hourglass rollers (47) being disposed between the inner race (30) and the outer race (50); and
each of the plurality of second hourglass rollers (47) engaging the outer surface (36) and the second inner surface (56).

8. The edge flap arrangement (2) of one of claims 1 to 7, the first bearing (20) further comprising:
a plurality of first hourglass rollers (45), each of the plurality of first hourglass rollers (45) having a generally concave outer surface (48), the plurality of first hourglass rollers (45) being disposed between the inner race (30) and the outer race (50);
the first inner surface (54) being convex and the outer surface (36) being convex; and
each of the plurality of first hourglass rollers (45) engaging the outer surface (36) and the first inner surface (54).

9. The edge flap arrangement (2) of claim 8, the first bearing (20) further comprising:
a second inner surface (56) defined by the outer race (50), the second inner surface (56) being convex;
a plurality of second hourglass rollers (47), each of the plurality of second hourglass rollers (47) having a generally concave outer surface (49), the plurality of second hourglass rollers (47) being disposed between the inner race (30) and the outer race (50); and
each of the plurality of second hourglass rollers (47) engaging the outer surface (36) and the second inner surface (56).

10. The edge flap arrangement (2) according to one of the preceding claims, wherein the resilient ring (76) has a width (W1) and the first annular retaining ring (72) and the second annular retaining ring (74) each have a width (W2), and the width (W2) being less than the width (W1) and the width (W2) is between about 70 percent and 90 percent of the width (W1).

## Patentansprüche

1. Klappenanordnung (2) für einen Flügel eines Flugzeugs, wobei die Anordnung Folgendes umfasst:
ein Hauptklappenelement (3) und einen Aktuator (7) zum Bewegen des Hauptklappenelements (3) relativ zum Flugzeugflügel;
eine Gestängeanordnung, die das Hauptklappenelement (3) vom Flugzeugflügel zum Bewegen relativ zum Flugzeugflügel stützt, wobei die Gestängeanordnung eine Abklappscharnier-Gelenkanordnung (5) umfasst, wobei die Abklappscharnier-Gelenkanordnung eine fixierte Strebe (5a) umfasst, die geeignet ist, am Flugzeugflügel gesichert zu werden, und
eine Koppelstrebe (5c), die am Hauptklappenelement gesichert ist, wobei die fixierte Strebe (5a) und die Koppelstrebe (5c) schwenkbar mittels eines Gelenkpunkts (5b) miteinander verbunden sind;
wobei der Gelenkpunkt (5b) mindestens ein erstes Lager (20) umfasst, wobei das erste Lager (20) Folgendes umfasst:
einen äußeren Laufring (50), der eine erste Innenoberfläche (54) und einen Innenbereich aufweist, eine radial nach innen gewandte Nut (57) benachbart der ersten Innenoberfläche (54);
einen inneren Laufring (30), der eine Außenoberfläche (36) aufweist, wobei ein Abschnitt des inneren Laufrings (30) in dem Innenbereich angeordnet ist;
**dadurch gekennzeichnet, dass** er Folgendes umfasst:
eine Verbund-Ringdichtungs-Baugruppe (80), die eine im Wesentlichen flache Ausgestaltung aufweist und in seitlicher Richtung elastisch ablenkbar ist und auf diese Weise in die Nut (57) des äußeren Laufrings (50) einrastet, wobei die Verbund-Ringdichtungs-Baugruppe (80) in der Lage ist, ihre Position beizubehalten,
wenn das Lager einer Winkelverlagerung unterzogen wird,
wobei die Verbund-Ringdichtungs-Baugruppe (80) Folgendes umfasst:
einen ersten ringförmigen Haltering (72), der einen ersten radial äußersten Abschnitt (72x) definiert;
einen zweiten ringförmigen Haltering (74), der einen zweiten radial äußersten Abschnitt (74x) definiert; und
einen spannkräftigen Ring (76), der einen dritten radial äußersten Abschnitt (76x) definiert, wobei der spannkräftige Ring (76) zwischen dem ersten ringförmigen Haltering (72) und dem zweiten ringförmigen Haltering (74) angeordnet ist;
wobei der erste radial äußerste Abschnitt (72x), der zweite radial äußerste Abschnitt (74x) und der dritte radial äußerste Abschnitt (76x) miteinander ausgerichtet sind;
wobei der spannkräftige Ring (76) von dem ersten ringförmigen Haltering (72) und dem zweiten ringförmigen Haltering (74) radial nach innen ragt; und der spannkräftige Ring (76) stärker komprimierbar und flexibler ist als der erste ringförmige Haltering (72) und der zweite ringförmige Haltering (74).

2. Klappenanordnung (2) nach Anspruch 1, überdies umfassend:
mindestens ein zweites Lager (20), das zum Bewegen des Hauptklappenelements (3) relativ zum Flugzeugflügel im Aktuator installiert ist, wobei das mindestens eine zweite Lager (20) Folgendes umfasst:
einen äußeren Laufring (50), der eine erste Innenoberfläche (54) und einen Innenbereich aufweist, eine radial nach innen gewandte Nut (57) benachbart der ersten Innenoberfläche (54);
einen inneren Laufring (30), der eine Außenoberfläche (36) aufweist, wobei ein Teil des inneren Laufrings (30) in dem Innenbereich angeordnet ist;
eine weitere Verbund-Ringdichtungs-Baugruppe (80), die eine im Wesentlichen flache Ausgestaltung aufweist und in seitlicher Richtung elastisch ablenkbar ist und auf diese Weise in die Nut (57) des äußeren Laufrings (50) einrastet, wobei die Verbund-Ringdichtungs-Baugruppe (80) in der Lage ist, ihre Position beizubehalten, wenn das Lager einer Winkelverlagerung unterzogen wird,
wobei die Verbund-Ringdichtungs-Baugruppe (80) Folgendes umfasst:
einen ersten ringförmigen Haltering (72), der einen ersten radial äußersten Abschnitt (72x) definiert;
einen zweiten ringförmigen Haltering (74), der einen zweiten radial äußersten Abschnitt (74x) definiert; und
einen spannkräftigen Ring (76), der einen dritten radial äußersten Abschnitt (76x) definiert, wobei der spannkräftige Ring (76) zwischen dem ersten ringförmigen Haltering (72) und dem zweiten ringförmigen Haltering (74) angeordnet ist;
wobei der erste radial äußerste Abschnitt (72x), der zweite radial äußerste Abschnitt (74x) und der dritte radial äußerste Abschnitt (76x) miteinander ausgerichtet sind;
wobei der spannkräftige Ring (76) von dem ersten ringförmigen Haltering (72) und dem zweiten ringförmigen Haltering (74) radial nach innen ragt; und
wobei der spannkräftige Ring (76) stärker komprimierbar und flexibler ist als der erste ringförmige Haltering (72) und der zweite ringförmige Haltering (74).

3. Klappenanordnung (2) nach Anspruch 1 oder 2, wobei der Gelenkpunkt (5b) eine Vielzahl von ersten Lagern (20) umfasst.

4. Klappenanordnung (2) nach Anspruch 2, wobei der Aktuator (7) eine Vielzahl von zweiten Lagern (20) umfasst.

5. Klappenanordnung (2) nach einem der Ansprüche 1 bis 4, wobei die Klappe für die Nutzung als Hinterkante eines Flugzeugflügels geeignet ist.

6. Klappenanordnung (2) nach einem der Ansprüche 1 bis 5,
wobei das erste Lager (20) überdies umfasst:
eine Vielzahl von ersten sanduhrförmigen Rollen (45), wobei jede von der Vielzahl von ersten sanduhrförmigen Rollen (45) eine allgemein konkave Außenoberfläche (48) aufweist, wobei die Vielzahl von sanduhrförmigen Rollen (45) zwischen dem inneren Laufring (30) und dem äußeren Laufring (50) angeordnet ist;
wobei die Innenoberfläche (54) konvex ist und die Außenoberfläche (36) konvex ist; und
wobei jede von der Vielzahl von ersten sanduhrförmigen Rollen (45) mit der Außenoberfläche (36) und der ersten Innenoberfläche (54) in Eingriff ist.

7. Klappenanordnung (2) nach Anspruch 2, wobei das erste Lager überdies umfasst:
eine zweite Innenoberfläche (56), die von dem äußeren Laufring (50) definiert ist, wobei die zweite Innenoberfläche (56) konvex ist;
eine Vielzahl von zweiten sanduhrförmigen Rollen (47), wobei jede von der Vielzahl von zweiten sanduhrförmigen Rollen (47) eine allgemein konkave Außenoberfläche aufweist, wobei die Vielzahl von zweiten sanduhrförmigen Rollen (47) zwischen dem inneren Laufring (30) und dem äußeren Laufring (50) angeordnet ist; und
wobei jede von der Vielzahl von zweiten sanduhrförmigen Rollen (47) mit der Außenoberfläche (36) und der zweiten Innenoberfläche (56) in Eingriff ist.

8. Klappenanordnung (2) nach einem der Ansprüche 1 bis 7, wobei das erste Lager (20) überdies umfasst:
eine Vielzahl von ersten sanduhrförmigen Rollen (45), wobei jede von der Vielzahl von ersten sanduhrförmigen Rollen (45) eine allgemein konkave Außenoberfläche (48) aufweist, wobei die Vielzahl von sanduhrförmigen Rollen (45) zwischen dem inneren Laufring (30) und dem äußeren Laufring (50) angeordnet ist;
wobei die Innenoberfläche (54) konvex ist und die Außenoberfläche (36) konvex ist; und
wobei jede von der Vielzahl von ersten sanduhrförmigen Rollen (45) mit der Außenoberfläche (36) und der ersten Innenoberfläche (54) in Eingriff ist.

9. Klappenanordnung (2) nach Anspruch 8, wobei das erste Lager (20) überdies umfasst:
eine zweite Innenoberfläche (56), die von dem äußeren Laufring (50) definiert ist, wobei die zweite Innenoberfläche (56) konvex ist;
eine Vielzahl von zweiten sanduhrförmigen Rollen (47), wobei jede von der Vielzahl von zweiten sanduhrförmigen Rollen (47) eine allgemein konkave Außenoberfläche (49) aufweist, wobei die Vielzahl von zweiten sanduhrförmigen Rollen (47) zwischen dem inneren Laufring (30) und dem äußeren Laufring (50) angeordnet ist; und
wobei jede von der Vielzahl von zweiten sanduhrförmigen Rollen (47) mit der Außenoberfläche (36) und der zweiten Innenoberfläche (56) in Eingriff ist.

10. Klappenanordnung (2) nach einem der vorhergehenden Ansprüche, wobei der spannkräftige Ring (76) eine Breite (W1) aufweist und der erste ringförmige Haltering (72) und der zweite ringförmige Haltering (74) jeweils eine Breite (W2) aufweisen, und wobei die Breite (W2) kleiner ist als die Breite (W1), und die Breite (W2) zwischen ungefähr 70 Prozent und 90 Prozent der Breite (W1) liegt.

## Revendications

1. Un agencement de volet de bordure (2) pour une aile d'avion, l'agencement comprenant :
un élément (3) formant volet principal et un actionneur (7) pour déplacer l'élément (3) formant volet principal par rapport à l'aile de l'avion ;
un agencement de liaison supportant l'élément (3) formant volet principal depuis l'aile de l'aéronef pour un mouvement par rapport à l'aile de l'aéronef, l'agencement de liaison comprenant un agencement de liaison à charnière (5), de descente, l'agencement de liaison à charnière, de descente, comprenant une jambe fixe (5a) adaptée à être fixée à l'aile de l'aéronef et une tringle de descente (5c) fixée à l'élément formant volet principal, la jambe fixe (5a) et la tringle de descente (5c) étant reliées de manière pivotante par un point d'articulation (5b) ;
le point d'articulation (5b) comprenant au moins un premier palier (20), le premier palier (20) comprenant :
une pièce annulaire extérieure (50) ayant une première surface intérieure (54) et une zone intérieure, une gorge (57) orientée radialement vers l'intérieur adjacente à la première surface intérieure (54) ;
une pièce annulaire intérieure (30) ayant une surface extérieure (36), une partie de la pièce annulaire intérieure (30) étant disposée dans la zone intérieure ;
**caractérisé en ce qu'**il comprend un ensemble (80) formant joint d'étanchéité annulaire composite ayant une configuration sensiblement plate et étant apte à être défléchi latéralement de manière élastique et à être ainsi encliqueté dans la gorge (57) de la pièce annulaire extérieure (50), l'ensemble (80) formant joint d'étanchéité annulaire composite étant apte à conserver sa position lorsque le palier est soumis à un déplacement angulaire,
l'ensemble (80) formant joint d'étanchéité annulaire composite comprenant :
une première bague de retenue annulaire (72) définissant une première partie (72x) radialement la plus extérieure ;
une deuxième bague de retenue annulaire (74) définissant une deuxième partie (74x) radialement la plus extérieure ; et
une bague élastique (76) définissant une troisième partie (76x) radialement la plus extérieure, la bague élastique (76) étant disposée entre la première bague de retenue annulaire (72) et la deuxième bague de retenue annulaire (74) ;
la première partie (72x) radialement la plus extérieure, la deuxième partie (74x) radialement la plus extérieure et la troisième partie (76x) radialement la plus extérieure étant alignées les unes avec les autres ;
la bague élastique (76) faisant saillie radialement vers l'intérieur depuis la première bague de retenue annulaire (72) et la deuxième bague de retenue annulaire (74) ; et la bague élastique (76) étant plus compressible et plus flexible que la première bague de retenue annulaire (72) et la deuxième bague de retenue annulaire (74).

2. L'agencement de volet de bordure (2) selon la revendication 1, comprenant en outre :
au moins un deuxième palier (20) installé dans l'actionneur pour déplacer l'élément (3) formant volet principal par rapport à l'aile de l'avion, ledit au moins un deuxième palier (20) comprenant :
une pièce annulaire extérieure (50) ayant une première surface intérieure (54) et une zone intérieure, une gorge (57) orientée radialement vers l'intérieur adjacente à la première surface intérieure (54) ;
une pièce annulaire intérieure (30) ayant une surface extérieure (36), une partie de la pièce annulaire intérieure (30) étant disposée dans la zone intérieure ;
un autre ensemble (80) formant joint d'étanchéité annulaire composite ayant une configuration sensiblement plate et étant apte à être défléchi latéralement de manière élastique et apte à être ainsi encliqueté dans la gorge (57) de la pièce annulaire extérieure (50), l'ensemble (80) formant joint d'étanchéité annulaire composite étant apte à conserver sa position lorsque le palier est soumis à un déplacement angulaire,
l'ensemble (80) formant joint d'étanchéité annulaire composite comprenant :
une première bague de retenue annulaire (72) définissant une première partie (72x) radialement la plus extérieure ;
une deuxième bague de retenue annulaire (74) définissant une deuxième partie (74x) radialement la plus extérieure ; et
une bague élastique (76) définissant une troisième partie (76x) radialement la plus extérieure, la bague élastique (76) étant disposée entre la première bague de retenue annulaire (72) et la deuxième bague de retenue annulaire (74) ;
la première partie (72x) radialement la plus extérieure, la deuxième partie (74x) radialement la plus extérieure et la troisième partie (76x) radialement la plus extérieure étant alignées les unes avec les autres ;
la bague élastique (76) faisant saillie radialement vers l'intérieur depuis la première bague de retenue annulaire (72) et la deuxième bague de retenue annulaire (74) ; et
la bague élastique (76) étant plus compressible et plus flexible que la première bague de retenue annulaire (72) et la deuxième bague de retenue annulaire (74).

3. L'agencement de volet de bordure (2) selon la revendication 1 ou la revendication 2, dans lequel le point d'articulation (5b) comprend une pluralité de premiers paliers (20).

4. L'agencement de volet de bordure (2) selon la revendication 2, dans lequel l'actionneur (7) comprend une pluralité de deuxièmes paliers (20).

5. L'agencement de volet de bordure (2) selon l'une des revendications 1 à 4, dans lequel le volet de bordure est apte à être utilisé comme bord de fuite d'une aile d'un aéronef.

6. L'agencement de volet de bordure (2) de l'une des revendications 1 à 5, le premier palier (20) comprenant en outre :
une pluralité de premiers rouleaux (45) en forme de sablier, chaque rouleau faisant partie de la pluralité de premiers rouleaux (45) en forme de sablier ayant une surface extérieure (48) généralement concave, la pluralité de premiers rouleaux (45) en forme de sablier étant disposée entre la pièce annulaire intérieure (30) et la pièce annulaire extérieure (50) ;
la première surface intérieure (54) étant convexe et la surface extérieure (36) étant convexe ; et
chaque rouleau faisant partie de la pluralité de premiers rouleaux (45) en forme de sablier venant en prise avec la surface extérieure (36) et la première surface intérieure (54).

7. L'agencement de volet de bordure (2) selon la revendication 6, le premier palier comprenant en outre :
une deuxième surface intérieure (56) définie par la pièce annulaire extérieure (50), la deuxième surface intérieure (56) étant convexe ;
une pluralité de deuxièmes rouleaux (47) de forme de sablier, chaque rouleau faisant partie de la pluralité de deuxièmes rouleaux (47) de forme de sablier ayant une surface extérieure généralement concave, la pluralité de deuxièmes rouleaux (47) de forme de sablier étant disposée entre la pièce annulaire intérieure (30) et la pièce annulaire extérieure (50) ; et
chaque rouleau faisant partie de la pluralité de deuxièmes rouleaux (47) en forme de sablier étant en engagement avec la surface extérieure (36) et la deuxième surface intérieure (56).

8. L'agencement de volet de bordure (2) de l'une des revendications 1 à 7, le premier palier (20) comprenant en outre :
une pluralité de premiers rouleaux (45) en forme de sablier, chaque rouleau faisant partie de la pluralité de premiers rouleaux (45) en forme de sablier ayant une surface extérieure (48) généralement concave, la pluralité de premiers rouleaux (45) en forme de sablier étant disposée entre la pièce annulaire intérieure (30) et la pièce annulaire extérieure (50) ;
la première surface intérieure (54) étant convexe et la surface extérieure (36) étant convexe ; et
chaque rouleau faisant partie de la pluralité de premiers rouleaux (45) en forme de sablier étant en engagement avec la surface extérieure (36) et la première surface intérieure (54).

9. L'agencement de volet de bordure (2) selon la revendication 8, le premier palier (20) comprenant en outre :
une deuxième surface intérieure (56) définie par la pièce annulaire extérieure (50), la deuxième surface intérieure (56) étant convexe ;
une pluralité de deuxièmes rouleaux (47) en forme de sablier, chaque rouleau faisant partie de la pluralité de deuxième rouleaux (47) en forme de sablier ayant une surface extérieure (49) généralement concave, la pluralité de deuxièmes rouleaux (47) en forme de sablier étant disposée entre la pièce annulaire intérieure (30) et la pièce annulaire extérieure (50) ; et
chaque rouleau faisant partie de la pluralité de deuxièmes rouleaux (47) en forme de sablier étant en engagement avec la surface extérieure (36) et la deuxième surface intérieure (56).

10. L'agencement de volet de bordure (2) selon l'une des revendications précédentes, dans lequel la bague élastique (76) a une largeur (W1) et la première bague de retenue annulaire (72) et la deuxième bague de retenue annulaire (74) ont chacune une largeur (W2), et la largeur (W2) étant inférieure à la largeur (W1) et la largeur (W2) se trouvant entre environ 70 % et 90 % de la largeur (W1).
